# EUROPEAN PATENT SPECIFICATION

(11) **EP 4 205 926 B1**
(45) Date of publication and mention of the grant of the patent: **15.10.2025**
(21) Application number: 21862124.1
(22) Date of filing: 27.08.2021
(51) Int. Cl.: B26D 7/18, B26D 1/60, B26D 7/02, B26D 5/02, H01M 4/04, B26D 7/06

(54) **ELECTRODE CUTTING APPARATUS INCLUDING DETACHED FOREIGN SUBSTANCE REMOVING UNIT**
ELEKTRODENSCHNEIDVORRICHTUNG MIT LÖSBARER EINHEIT ZUM ENTFERNEN VON FREMDSUBSTANZEN
APPAREIL DE COUPE D'ÉLECTRODE COMPRENANT UNE UNITÉ DE RETRAIT DE SUBSTANCE ÉTRANGÈRE DÉTACHÉE

(30) Priority: 28.08.2020 KR 20200109630
(43) Date of publication of application: 05.07.2023
(73) Proprietor: LG Energy Solution, Ltd., Seoul 07335 (KR)
(72) Inventor: LEE, Ju Won, Daejeon 34122 (KR); LEE, Seung Hwan, Daejeon 34122 (KR); KIM, Sung Dong, Daejeon 34122 (KR)
(74) Representative: Goddar, Heinz J.
(86) International application number: PCT/KR2021/011514
(87) International publication number: WO 2022/045828

(56) References cited:
- JP-A- 2003 025 136
- KR-A- 20150 137 640
- KR-B1- 101 115 299
- KR-B1- 101 337 226
- US-A1- 2006 065 090

## Description

### [Technical Field]

The present invention relates to an electrode cutting apparatus including a separated foreign matter removal unit, and more particularly to an electrode cutting apparatus including a separated foreign matter removal unit capable of immediately removing separated foreign matter generated at the time of electrode cutting through a blow unit and a suction unit configured to be repeatedly operated and stopped according to an electrode cutting operation in order to remove separated foreign matter generated when the electrode cutting apparatus performs electrode cutting.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

The lithium secondary battery includes an electrode assembly including a stack of a positive electrode plate coated with a positive electrode active material, a negative electrode plate coated with a negative electrode active material, and a separator located between the positive electrode plate and the negative electrode plate, the separator being configured to prevent short circuit, the separator being configured such that lithium ions (Li-ion) are movable therethrough, a battery case configured to receive the electrode assembly, and an electrolytic solution injected into the battery case such that the lithium ions are movable.

In general, the positive electrode plate and the negative electrode plate may be manufactured through a process of coating a long sheet type positive electrode sheet and a long sheet type negative electrode sheet with a positive electrode active material and a negative electrode active material, respectively, drying and rolling the active materials, and cutting the positive electrode sheet and the negative electrode sheet to a predetermined size to manufacture unit electrodes.

A conventional electrode plate cutting apparatus configured to manufacture the unit electrodes includes a feeding unit configured to feed an electrode plate in a state of being seated and a cutter installed at one side of the feeding unit. The cutter is divided into an upper cutter and a lower cutter. Specifically, based on the electrode plate, the lower cutter is fixed to the lower side of the electrode plate while the upper cutter is installed at the upper side of the electrode plate, and the upper cutter is moved upwards and downwards at an electrode plate cutting position. When the electrode plate is fed to the cutting apparatus, therefore, the edge of the upper cutter and the edge of the lower cutter come into contact with each other to cut the electrode plate.

As a result of repetitive cross contact between the upper cutter and the lower cutter, however, foreign matter is generated, the edges of the cutters are worn, and the edges of the cutters are curved, whereby the electrode plate is cut in the state in which a cut section is not smooth or a burr is generated.

As the cutting process using the upper cutter and the lower cutter is repeatedly performed, foreign matter is continuously separated from the electrode sheet.

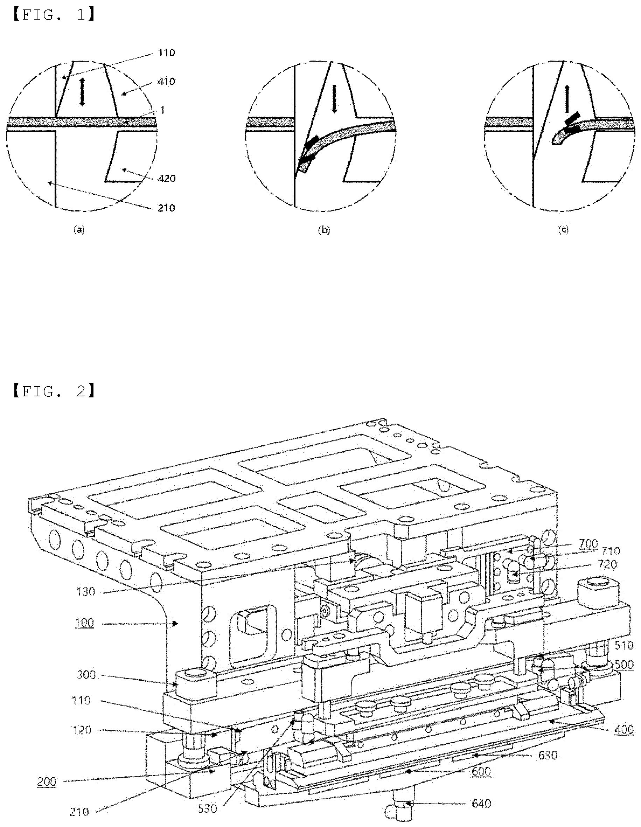

In connection therewith, FIG. 1 is a view showing operation of a conventional electrode cutting apparatus including no separated foreign matter removal unit.

Referring to (a) of FIG. 1, there are shown an upper cutter 110 configured to reciprocate upwards and downwards in order to cut an electrode sheet and a stationary lower cutter 210 configured to cut the electrode sheet that enters between the lower cutter and the upper cutter.

There is also shown a gripper 400 configured to face the electrode sheet, which is supplied between the upper cutter, which performs upward and downward reciprocation, and the lower cutter, which is stationary, in parallel therewith, the gripper being configured to fix the electrode sheet.

There are also shown an upper gripper 410 formed so as to face the upper cutter in parallel therewith and a lower gripper 420 formed so as to face the lower cutter in parallel therewith. The upper gripper and the lower gripper may fix the electrode sheet.

Referring to (b) of FIG. 1, when the upper cutter cuts the electrode sheet while moving downwards, foreign matter may be generated from a cut portion of the electrode sheet.

Referring to (c) of FIG. 1, when the upper cutter moves upwards after cutting the electrode sheet, the foreign matter may be separated from the cut portion of the electrode sheet.

Patent Document 1 discloses a separator cutting apparatus for secondary batteries configured to cut a raw material for separators, the separator cutting apparatus including a cutting unit configured to cut the raw material for separators along a predetermined cutting line, wherein the cutting unit includes a cutter member having a first cutter end and a second cutter end, and a cleaner member configured to remove contaminants generated when the raw material for separators is cut. However, the construction of a separated foreign matter removal unit provided at an electrode cutting apparatus including an upper cutter and a lower cutter is not disclosed.

Patent Document 2 discloses an electrode production system including upper and lower mold fixing plates and a dust collection nozzle configured to suction foreign matter, wherein the upper and lower mold fixing plates are moved through a crank shaft. However, the construction of a separated foreign matter removal unit including an electrode sheet gripper and a blow unit provided at an electrode cutting apparatus including an upper cutter and a lower cutter is not disclosed.

Therefore, there is a need to develop an electrode cutting apparatus including a separated foreign matter removal unit configured to easily remove foreign matter generated from an electrode sheet cut through upward and downward reciprocation of an upper cutter and a lower cutter through blowing and suction and to be repeatedly operated and stopped in a state of being interlocked with upward and downward reciprocation of the cutters in order to effectively remove the separated foreign matter.

### (Prior Art Documents)

(Patent Document 1) Korean Registered Patent Publication No. 1893706
(Patent Document 2) Korean Registered Patent Publication No. 1475703
(Patent Document 3) Korean Patent Publication Document KR 20150137640, discloses an electrode cutting apparatus comprising: an upper unit comprising an upper cutter disposed above an electrode sheet; a lower unit comprising a lower cutter disposed under the electrode sheet; the upper cutter being configured to perform upward and downward reciprocation, and the lower cutter being configured to remain stationary, the lower cutter being in parallel with the upper cutter, and a blow unit the blow unit configured to remove foreign matter generated when the supplied electrode sheet is cut.

### [Disclosure]

### [Technical Problem]

The present invention has been made in view of the above problems, and it is an object of the present invention to provide an electrode cutting apparatus including a separated foreign matter removal unit capable of immediately removing separated foreign matter generated at the time of electrode cutting through a blow unit and a suction unit configured to be repeatedly operated and stopped according to an electrode cutting operation in order to remove separated foreign matter generated when the electrode cutting apparatus, which includes an upper cutter, performs electrode cutting.

### [Technical Solution]

In order to accomplish the above object, an electrode cutting apparatus according to the present invention includes an upper unit (100) including an upper cutter (110) disposed above an electrode sheet; a lower unit (200) including a lower cutter (210) disposed under the electrode sheet; a gripper (400) configured to face the electrode sheet supplied between the upper cutter, which is configured to perform upward and downward reciprocation, and the lower cutter, which is configured to remain stationary, the lower cutter being in parallel with the upper cutter, the gripper being configured to fix the electrode sheet; an upper gripper (410); and a blow unit (500) located at the upper gripper (410), the blow unit configured to remove foreign matter generated when the supplied electrode sheet is cut.

The electrode cutting apparatus may further include a lower gripper (420) and a suction unit located at the lower unit and the lower gripper (420).

The electrode cutting apparatus may further include a suction blow valve unit (700) formed at one side of the upper unit, the suction blow valve unit configured such that an air pressure valve (not shown) connected via a blow fitting portion (510) of the blow unit and a valve blow fitting portion (710) is opened only when the upper cutter is moved downwards.

The blow unit may be provided with an injection nozzle (520), and the injection nozzle may be located so as to face the portion at which the upper cutter and the lower cutter cross in the state in which the electrode sheet is interposed between the upper cutter and the lower cutter.

The injection nozzle may have a downward angle of greater than 0 degrees to less than 90 degrees relative to a horizontal plane.

The suction unit may have a section that is gradually narrowed from the upper part to the lower part thereof, the width of an upper suction portion (610) that faces the lower cutter may be formed so as to correspond to the width of the lower cutter, and the width of the upper suction portion may be gradually narrowed from the surface thereof corresponding to the lower cutter.

The surface of the upper suction portion that faces the lower cutter may define a plurality of suction holes (620).

The suction unit may be provided in a side surface thereof adjacent to the upper suction portion with a plurality of vacuum prevention holes (630).

A suction fitting portion (640) of the suction unit and a valve suction fitting portion (720) of the suction blow valve unit may be operated through upward and downward movement of the suction blow valve (730) simultaneously with a cross between the upper cutter and the lower cutter or at a predetermined time after the cross between the upper cutter and the lower cutter.

The blow unit may be provided at one side thereof with an injection adjustment portion (530) configured to adjust the injection flow rate and/or the number of injections of the injection nozzle.

### [Advantageous Effects]

As is apparent from the above description, an electrode cutting apparatus including a separated foreign matter removal unit according to the present invention is configured such that the separated foreign matter removal unit is operated and stopped in a state of being interlocked with upward and downward reciprocation of an upper cutter and a lower cutter, whereby it is possible to continuously remove separated foreign matter.

In addition, the separated foreign matter removal unit is further assembled to a main body of the electrode cutting apparatus, whereby it is possible to accurately and easily remove separated foreign matter without being affected by adjustment of clearance and parallelism between the upper cutter and the lower cutter.

In addition, the separated foreign matter removal unit is mounted to the main body so as to be interlocked with operation of the upper cutter and the lower cutter, whereby it is possible to manage electrodes cut so as to have consistent quality.

In addition, it is possible to effectively remove foreign matter having an electrode mixture layer separated from the cut surface of an electrode cut using the electrode cutting apparatus including the separated foreign matter removal unit according to the present invention, whereby it is possible to reduce an electrode defect rate and to increase electrode production speed.

### [Description of Drawings]

FIG. 1 is a conceptual view showing that separated foreign matter is generated at a conventional electrode cutting apparatus.
FIG. 2 is a perspective view of an electrode cutting apparatus including a separated foreign matter removal unit according to an embodiment of the present invention.
FIG. 3 is a front view and a perspective view of a suction blow valve unit according to an embodiment of the present invention.
FIG. 4 is a perspective view of a blow unit according to an embodiment of the present invention.
FIG. 5 is a perspective view of a suction unit according to an embodiment of the present invention.
FIG. 6 is a detailed perspective view of the electrode cutting apparatus to which the blow unit and the suction unit according to the embodiments of the present invention are applied.
FIG. 7 is a photograph showing capture of foreign matter generated when the separated foreign matter removal unit according to the embodiment of the present invention is operated and stopped.
FIG. 8 is a table showing comparison in particle size distribution of foreign matter generated when the separated foreign matter removal unit according to the embodiment of the present invention is operated and stopped.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the accompanying drawings.

FIG. 2 is a perspective view of an electrode cutting apparatus including a separated foreign matter removal unit according to an embodiment of the present invention.

The electrode cutting apparatus may include an upper unit 100 including an upper cutter 110 disposed above an electrode sheet; a lower unit 200 including a lower cutter 210 disposed under the electrode sheet; a guide portion 300 configured to guide upward and downward movement of the upper unit; a gripper 400 configured to face the electrode sheet, which is supplied between the upper cutter, which performs upward and downward reciprocation, and the lower cutter, which is stationary, in parallel therewith, the gripper being configured to fix the electrode sheet; an upper gripper 410; and a blow unit 500 located at the upper gripper 410, the blow unit being configured to remove foreign matter generated when the electrode sheet is cut.

The upper unit may include an upper cutter configured to cut the electrode sheet, an upper holder to which the upper cutter is fixed, and an upper frame to which the upper holder is mounted.

The upper cutter may be configured to have a double-edged structure in which a central portion of the upper cutter is short and opposite ends of the upper cutter are long. For example, the lower part of the upper cutter may have a curved arch shape when viewed in plan view or a bent polygonal structure when viewed in plan view.

The lower unit may include a lower cutter configured to cut the electrode sheet and a lower frame to which the lower cutter is fixed.

A moving unit 130 configured to transmit power to the upper unit may be further included.

The moving unit performs a function of transmitting power necessary for upward and downward movement of the upper frame and a function of preventing occurrence of tolerance in clearance between the upper cutter and the lower cutter.

Specifically, the electrode sheet is cut in the state in which the clearance between the upper cutter and the lower cutter is accurately adjusted. As the number of cuttings is increased, tolerance occurs in the adjusted clearance between the upper cutter and the lower cutter, and the tolerance may deviate from a permitted limit.

In the present invention, as described above, the moving unit is further disposed at a central portion of the upper frame in order to guarantee straightness in upward and downward movement of the upper cutter, whereby distortion of the upper cutter may be prevented, and therefore uniform force of cutting the electrode sheet may be maintained.

The gripper includes a pair of an upper gripper and a lower gripper disposed respectively at the upper surface and the lower surface of the electrode sheet.

The clearance between the upper gripper and the lower gripper may be reduced so as to grip the electrode sheet. Alternatively, the clearance between the upper gripper and the lower gripper may be adjusted in the state in which the upper gripper and the lower gripper are spaced apart from each other such that cutting and feeding of the electrode sheet are continuously performed.

In the electrode cutting apparatus according to the present invention, the electrode sheet may be disposed between the upper unit and the lower unit, and the upper cutter may be downwardly moved so as to be adjacent to the front surface of the lower cutter in order to cut the electrode sheet.

When the electrode sheet is fed by a feeding roller, a main body of the electrode cutting apparatus is synchronized with feeding speed of the electrode sheet and is moved in a feeding direction of the electrode sheet. When relative speed between the main body and the electrode sheet in the feeding direction becomes 0, the upper unit is moved upwards and downwards to cut the electrode sheet.

Subsequently, when the main body of the electrode cutting apparatus returns to a work start position, 1 cycle is completed, and the electrode sheet is cut while the cycle is repeated.

The upper unit 100 is disposed above an electrode sheet 1 for cutting, the lower unit 200 is disposed under the electrode sheet for cutting, and the guide portion 300 performs a function of guiding upward and downward movement of the upper unit 100.

The upper unit 100 includes an upper cutter 110 configured to cut the electrode sheet, an upper holder 120 to which the upper cutter 110 is fixed, and an upper frame (not shown) to which the upper holder 120 is mounted.

The lower unit 200 includes a lower cutter 210 configured to cut the electrode sheet and a lower frame 220 to which the lower cutter 210 is fixed.

The electrode sheet is disposed between the upper unit 100 and the lower unit 200. The upper cutter 110 may be downwardly moved so as to be adjacent to the front surface of the lower cutter 210 in order to cut the electrode sheet.

When the upper cutter 110 is moved downwards, there may be formed no clearance between the lower cutter 210 and the upper cutter 110. Specifically, the clearance may be 0.

The electrode cutting apparatus may include a lower gripper 420, and a suction unit 600 located at the lower unit and the lower gripper 420.

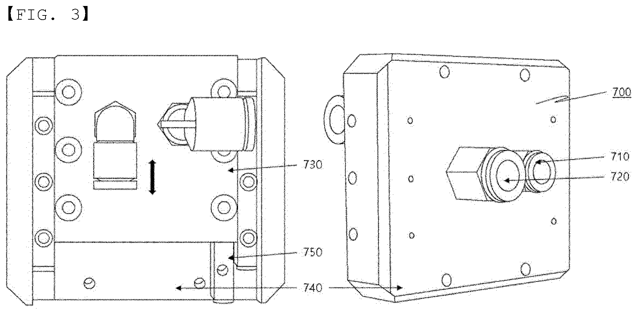

FIG. 3 is a front view and a perspective view of a suction blow valve unit according to an embodiment of the present invention.

The suction blow valve unit may include a valve blow fitting portion 710 connected to the blow unit and a valve suction fitting portion 720 connected to the suction unit.

The suction blow valve unit may include a suction blow valve 730 movable upwards and downwards, the suction blow valve being configured to serve as valves of a suction fitting portion 640 of the suction unit and the valve suction fitting portion 720 of the suction blow valve unit simultaneously with cross between the upper cutter and the lower cutter or at a predetermined time after cross between the upper cutter and the lower cutter.

The rectangular suction blow valve may be coupled to a rectangular suction blow valve plate 740, and may serve as the valves of the suction fitting portion 640 of the suction unit and the valve suction fitting portion 720 of the suction blow valve unit while being moved upwards and downwards along a suction blow valve rail 750 formed on the suction blow valve plate.

That is, the suction blow valve itself may serve as a vacuum pressure valve between the suction fitting portion and the valve suction fitting portion.

In general, when the suction blow valve is moved upwards, the valve may be closed, and, when the suction blow valve is moved downwards, the valve may be opened. The upward and downward movement of the suction blow valve may be inversely configured as long as opening and closing of the valve are performed.

A suction blow valve unit 700 may be formed at one side of the upper unit. The suction blow valve unit may be configured such that an air pressure valve (not shown) connected via a blow fitting portion 510 of the blow unit and the valve blow fitting portion 710 is opened only when the upper cutter is moved downwards.

A fluid, preferably air, necessary to blow foreign matter generated at the electrode cutting apparatus may be supplied from the suction blow valve unit.

Vacuum pressure necessary to remove separated foreign matter generated at the electrode cutting apparatus by suctioning may be supplied from the suction blow valve unit.

The suction blow valve unit is a switching structure configured to connect the blow unit and/or the suction unit for supply of main air pressure and removal of foreign matter in response to operation of the electrode cutting apparatus.

That is, the suction blow valve unit controls air and vacuum pressure necessary for the blow unit and/or the suction unit in a state of being interlocked with upward and downward reciprocation of the upper cutter formed at the upper unit.

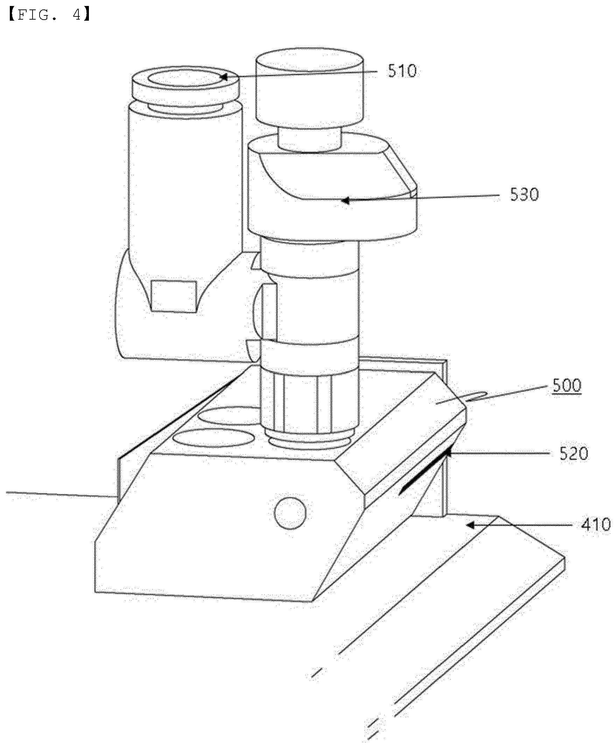

FIG. 4 is a perspective view of a blow unit according to an embodiment of the present invention.

The blow unit may be provided with an injection nozzle 520, and the injection nozzle may be located so as to face the portion at which the upper cutter and the lower cutter cross in the state in which the electrode sheet is interposed therebetween.

Preferably, the blow unit is formed at each of opposite ends of the upper surface of the upper gripper so as to correspond to the upper cutter.

The injection nozzle may have a downward angle α of greater than 0 degrees to less than 90 degrees relative to a horizontal plane. The downward angle of the injection nozzle is preferably 10 degrees to 60 degrees, more preferably 20 degrees to 45 degrees. The downward angle of the injection nozzle may be 30 degrees. If the downward angle of the injection nozzle deviates from the above range, foreign matter may not be smoothly separated.

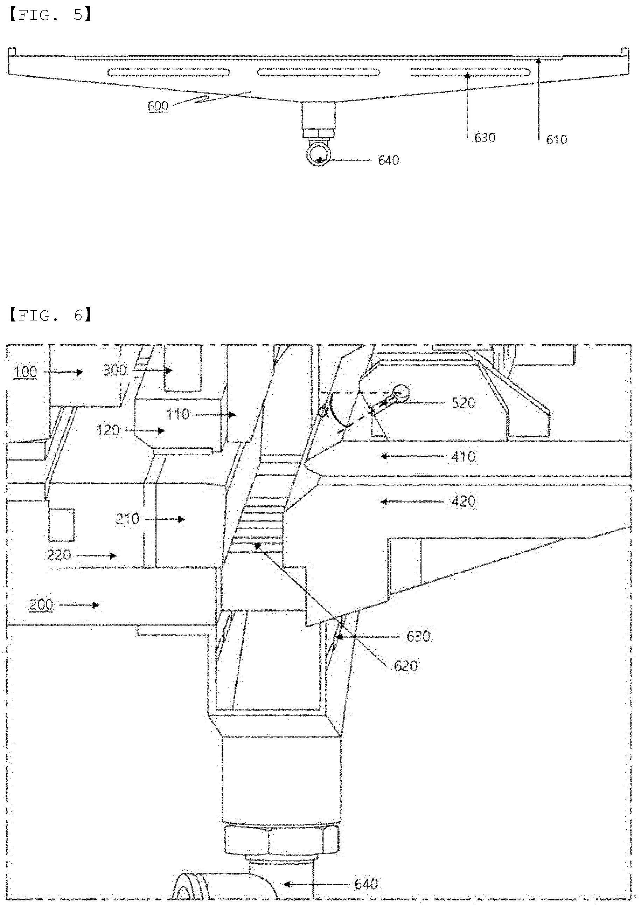

FIG. 5 is a perspective view of a suction unit according to an embodiment of the present invention.

The suction unit may have a section that is gradually narrowed from the upper part to the lower part thereof, and the width of an upper suction portion 610 that faces the lower cutter may be formed so as to correspond to the width of the lower cutter. The upper suction portion may have a shape in which the width of the upper suction portion is gradually narrowed from the surface thereof corresponding to the lower cutter.

Preferably, the shape is an inverted equilateral triangle (∇).

FIG. 6 is a detailed perspective view of the electrode cutting apparatus to which the blow unit and the suction unit according to the embodiments of the present invention are applied.

The surface of the upper suction portion that faces the lower cutter may be provided with a plurality of suction holes 620. Foreign matter separated by the blow unit may be introduced into the suction holes, whereby the foreign matter may be removed.

### (Example 1)

Experiments were performed using an electrode cutting apparatus including a separated foreign matter removal unit according to an embodiment of the present invention.

Foreign matter generated while a supplied electrode sheet was cut 10,000 times using the electrode cutting apparatus including the separated foreign matter removal unit was captured and analyzed. As a comparative example, foreign matter generated while the electrode sheet was cut 10,000 times in the state in which the separated foreign matter removal unit was not operated was captured and analyzed.

Foreign matter generated at the time of cutting was captured under the electrode cutting apparatus for comparison in amount of the foreign matter.

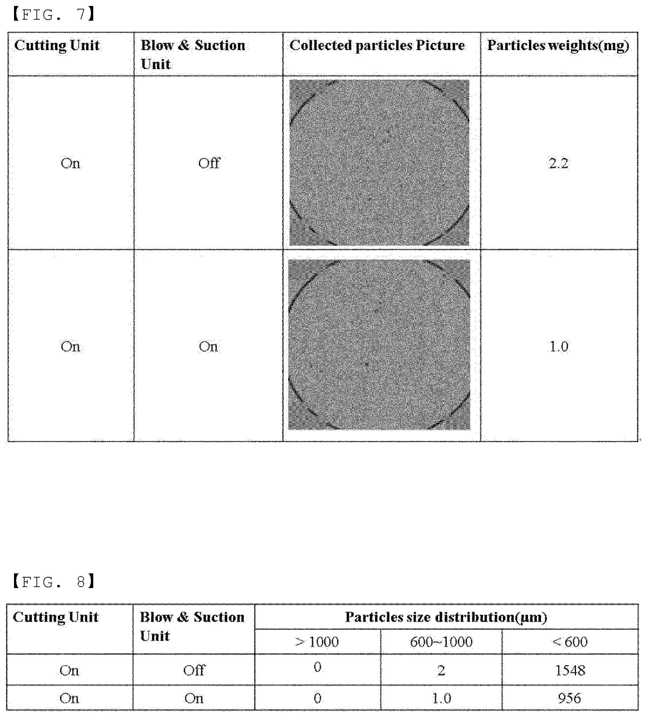

FIG. 7 is a photograph showing capture of foreign matter generated when the separated foreign matter removal unit according to the embodiment of the present invention is operated and stopped.

It can be seen from FIG. 7 that the capture amounts of separated foreign matter were different from each other, as can be seen from photographs, and that the amount of foreign matter captured when the separated foreign matter removal unit was operated was reduced by about 50% or more.

FIG. 8 is a table showing a comparison in particle size distribution of foreign matter generated when the separated foreign matter removal unit according to the embodiment of the present invention is operated and stopped.

As the result of analysis, the largest size of foreign matter captured when the separated foreign matter removal unit of the electrode cutting apparatus was operated was 714 µm, and the largest size of metallic foreign matter was 297 µm.

As the result of analysis, the largest size of foreign matter captured when the separated foreign matter removal unit of the electrode cutting apparatus was not operated was 861 µm, and the largest size of metallic foreign matter was 634 µm.

Those skilled in the art to which the present invention pertains will appreciate that various applications and modifications are possible within the scope of the claims.

### (Description of Reference Numerals)

- 1:: Electrode sheet
- 100:: Upper unit
- 110:: Upper cutter
- 120:: Upper holder
- 200:: Lower unit
- 210:: Lower cutter
- 220:: Lower frame
- 300:: Guide portion
- 400:: Gripper
- 410:: Upper gripper
- 420:: Lower gripper
- 500:: Blow unit
- 510:: Blow fitting portion
- 520:: Injection nozzle
- 530:: Injection adjustment portion
- 600:: Suction unit
- 610:: Upper suction portion
- 620:: Suction hole
- 630:: Vacuum prevention hole
- 640:: Suction fitting portion
- 700:: Suction blow valve unit
- 710:: Valve blow fitting portion
- 720:: Valve suction fitting portion
- 730:: Suction blow valve
- 740:: Suction blow valve plate
- 750:: Suction blow valve rail

## Claims

1. An electrode cutting apparatus comprising:
an upper unit (100) comprising an upper cutter (110) disposed above an electrode sheet (1);
a lower unit (200) comprising a lower cutter disposed under the electrode sheet (1); **characterized by**
a gripper configured to face the electrode sheet (1) supplied between the upper cutter (110), which is configured to perform upward and downward reciprocation, and the lower cutter (210), which is configured to remain stationary, the lower cutter (210) being in parallel with the upper cutter (110), the gripper being configured to fix the electrode sheet (1);
an upper gripper (410); and
a blow unit (500) located at the upper gripper (410), the blow unit (500) configured to remove foreign matter generated when the supplied electrode sheet (1) is cut.

2. The electrode cutting apparatus according to claim 1, further comprising a lower gripper (420); and a suction unit (600) located at the lower unit (200) and the lower gripper (420).

3. The electrode cutting apparatus according to claim 1, further comprising a suction blow valve unit (700) formed at one side of the upper unit (100), the suction blow valve unit (700) configured such that a suction blow valve (730) connected via a blow fitting portion (510) of the blow unit (500) and a valve blow fitting portion (710) is opened only when the upper cutter (110) is moved downwards.

4. The electrode cutting apparatus according to claim 3, wherein the blow unit (500) is provided with an injection nozzle (520), and
wherein the injection nozzle (520) is located so as to face a portion at which the upper cutter (110) and the lower cutter (210) cross in a state in which the electrode sheet (1) is interposed between the upper cutter (110) and the lower cutter (210).

5. The electrode cutting apparatus according to claim 4, wherein the injection nozzle (520) has a downward angle of greater than 0 degrees to less than 90 degrees relative to a horizontal plane.

6. The electrode cutting apparatus according to claim 2, wherein
the suction unit (600) has a section that is gradually narrowed from an upper part to a lower part thereof,
a width of an upper suction portion (610) that faces the lower cutter (210) is formed so as to correspond to a width of the lower cutter (210), and
the width of the upper suction portion (610) is gradually narrowed from a surface thereof corresponding to the lower cutter (210).

7. The electrode cutting apparatus according to claim 6, wherein a surface of the upper suction portion (610) that faces the lower cutter (210) defines a plurality of suction holes (620).

8. The electrode cutting apparatus according to claim 6, wherein the suction unit (600) is provided in a side surface thereof adjacent to the upper suction portion (610) with a plurality of vacuum prevention holes (630).

9. The electrode cutting apparatus according to claims 2 and 3, wherein a suction fitting portion (640) of the suction unit (600) and a valve suction fitting portion (720) of the suction blow valve unit (700) are operated through upward and downward movement of the suction blow valve (730) simultaneously with a cross between the upper cutter (110) and the lower cutter (210) or at a predetermined time after the cross between the upper cutter (110) and the lower cutter (210).

10. The electrode cutting apparatus according to claim 3 or 4, wherein the blow unit (500) is provided at one side thereof with an injection adjustment portion (530) configured to adjust an injection flow rate and/or a number of injections of the injection nozzle (520).

## Patentansprüche

1. Eine Elektrodenschneidvorrichtung mit:
eine obere Einheit (100) mit einer oberen Schneideinrichtung (110), die oberhalb eines Elektrodenblattes (1) angeordnet ist;
eine untere Einheit (200) mit einer unteren Schneideinrichtung, die unter dem Elektrodenblatt (1) angeordnet ist; **gekennzeichnet durch**
einen Greifer, der dazu konfiguriert ist, dass er dem Elektrodenblatt (1) zugewandt ist, das zwischen der oberen Schneideinrichtung (110), die dazu konfiguriert ist, eine Aufwärts- und Abwärtsbewegung auszuführen, und der unteren Schneideinrichtung (210), die stationär zu bleiben konfiguriert ist, zugeführt zu werden, wobei die untere Schneideinrichtung (210) parallel zu der oberen Schneideinrichtung (110) ist und der Greifer dazu konfiguriert ist, das Elektrodenblatt (1) zu fixieren;
einen oberen Greifer (410); und
eine Blaseinheit (500), die an dem oberen Greifer (410) angeordnet ist, wobei die Blaseinheit (500) dazu konfiguriert ist, Fremdkörper zu entfernen, die erzeugt werden, wenn das zugeführte Elektrodenblatt (1) geschnitten wird.

2. Die Elektrodenschneidvorrichtung nach Anspruch 1 umfasst ferner einen unteren Greifer (420) und eine Saugeinheit (600), die an der unteren Einheit (200) und dem unteren Greifer (420) angeordnet ist.

3. Elektrodenschneidvorrichtung gemäß Anspruch 1, ferner umfassend eine Saugblasventileinheit (700), die an einer Seite der oberen Einheit (100) ausgebildet ist, wobei die Saugblasventileinheit (700) dazu konfiguriert ist, dass ein Saugblasventil (730), das über einen Blasanschlussabschnitt (510) der Blaseinheit (500) und einen Ventilblasanschlussabschnitt (710) verbunden ist, nur geöffnet wird, wenn die obere Schneideinrichtung (110) nach unten bewegt wird.

4. Elektrodenschneidvorrichtung nach Anspruch 3, wobei die Blaseinheit (500) mit einer Einspritzdüse (520) versehen ist, und
wobei die Einspritzdüse (520) so angeordnet ist, dass sie einem Abschnitt zugewandt ist, an dem sich die obere Schneideinrichtung (110) und die untere Schneideinrichtung (210) in einem Zustand kreuzen, in dem das Elektrodenblatt (1) zwischen der oberen Schneideinrichtung (110) und der unteren Schneideinrichtung (210) angeordnet ist.

5. Die Elektrodenschneidvorrichtung nach Anspruch 4, wobei die Einspritzdüse (520) einen Abwärtswinkel von mehr als 0 Grad bis weniger als 90 Grad relativ zu einer horizontalen Ebene aufweist.

6. Elektrodenschneidvorrichtung nach Anspruch 2, wobei
die Saugeinheit (600) einen Abschnitt aufweist, der sich von einem oberen Teil zu einem unteren Teil hin allmählich verjüngt,
eine Breite eines oberen Ansaugteils (610), der der unteren Schneideinrichtung (210) zugewandt ist, so ausgebildet ist, dass sie einer Breite der unteren Schneideinrichtung (210) entspricht, und
die Breite des oberen Ansaugteils (610) von einer Fläche, die der unteren Schneideinrichtung (210) entspricht, allmählich verengt wird.

7. Elektrodenschneidvorrichtung nach Anspruch 6, wobei eine Oberfläche des oberen Ansaugteils (610), die der unteren Schneideinrichtung (210) zugewandt ist, eine Vielzahl von Sauglöchern (620) definiert.

8. Elektrodenschneidvorrichtung nach Anspruch 6, wobei die Saugeinheit (600) in einer Seitenfläche neben dem oberen Ansaugteil (610) mit einer Vielzahl von Vakuumverhinderungslöchern (630) versehen ist.

9. Elektrodenschneidvorrichtung nach den Ansprüchen 2 und 3, wobei ein Sauganschlussteil (640) der Saugeinheit (600) und ein Ventilsauganschlussteil (720) der Saugblasventileinheit (700) durch Auf- und Abwärtsbewegung des Saugblasventils (730) gleichzeitig mit einer Kreuzung zwischen der oberen Schneideinrichtung (110) und der unteren Schneideinrichtung (210) oder zu einem vorbestimmten Zeitpunkt nach der Kreuzung zwischen der oberen Schneideinrichtung (110) und der unteren Schneideinrichtung (210) betrieben werden.

10. Elektrodenschneidvorrichtung nach Anspruch 3 oder 4, wobei die Blaseinheit (500) an einer Seite mit einem Einspritzeinstellabschnitt (530) versehen ist, der dazu konfiguriert ist, eine Einspritzflussrate und/oder eine Anzahl von Einspritzungen der Einspritzdüse (520) einzustellen.

## Revendications

1. Appareil de coupe d'électrode comprenant :
un dispositif supérieur (100) comprenant une fraise supérieure (110) disposée au-dessus d'une feuille d'électrode (1) ;
un dispositif inférieur (200) comprenant une fraise inférieure disposée sous la feuille d'électrode (1) ; **caractérisé par**
un dispositif de saisie configuré de façon à faire face à la feuille d'électrode (1) agencée entre la fraise supérieure (110), configurée pour effectuer un mouvement alternatif en haut et en bas, et la fraise inférieure (210), configurée pour rester fixe, la fraise inférieure (210) étant parallèle à la fraise supérieure (110), le dispositif de saisie étant configuré pour fixer la feuille d'électrode (1) ;
un dispositif de saisie supérieur (410) ; et
un dispositif de soufflage (500) situé au dispositif de saisie supérieur (410), le dispositif de soufflage (500) étant configuré pour éliminer des corps étrangers générés lors de la coupe de la feuille d'électrode agencée (1).

2. Appareil de coupe d'électrode selon la revendication 1, comprenant en outre un dispositif de saisie inférieur (420) ; et un dispositif d'aspiration (600) situé au dispositif inférieur (200) et au dispositif de saisie inférieur (420).

3. Appareil de coupe d'électrode selon la revendication 1, comprenant en outre un dispositif de soupape d'évacuation de l'aspiration (700) agencé sur un côté du dispositif supérieur (100), le dispositif de soupape d'évacuation de l'aspiration (700) étant configuré afin qu'une soupape d'évacuation de l'aspiration (730), reliée via une partie de raccord de soufflage (510) du dispositif de soufflage (500) et une partie de raccord de soufflage de soupape (710), ne soit ouverte que lors du déplacement vers le bas de la fraise supérieure (110).

4. Appareil de coupe d'électrode selon la revendication 3, le dispositif de soufflage (500) étant doté d'une buse d'injection (520), et
la buse d'injection (520) étant située de façon à faire face à une partie au niveau de laquelle la fraise supérieure (110) et la fraise inférieure (210) se croisent dans un état où la feuille d'électrode (1) est intercalée entre la fraise supérieure (110) et la fraise inférieure (210).

5. Appareil de coupe d'électrode selon la revendication 4, la buse d'injection (520) présentant un angle descendant allant de plus de 0 degré à moins de 90 degrés par rapport à l'horizontale.

6. Appareil de coupe d'électrode selon la revendication 2,
le dispositif d'aspiration (600) présentant une section se rétrécissant progressivement de sa partie supérieure à sa partie inférieure,
une largeur d'une partie d'aspiration supérieure (610) faisant face à la fraise inférieure (210) étant formée de façon à correspondre à une largeur de la fraise inférieure (210), et
la largeur de la partie supérieure d'aspiration (610) se rétrécissant progressivement depuis une surface de celle-ci correspondant à la fraise inférieure (210).

7. Appareil de coupe d'électrode selon la revendication 6, une surface de la partie d'aspiration supérieure (610) faisant face à la fraise inférieure (210) définissant une pluralité d'orifices d'aspiration (620).

8. Appareil de coupe d'électrode selon la revendication 6, le dispositif d'aspiration (600) étant agencé dans une surface latérale de celui-ci adjacente à la partie d'aspiration supérieure (610) avec une pluralité d'orifices de prévention de l'aspiration (630).

9. Appareil de coupe d'électrode selon les revendications 2 et 3, une partie de raccord d'aspiration (640) du dispositif d'aspiration (600) et une partie du raccord d'aspiration de soupape (720) du dispositif de soupape d'évacuation de l'aspiration (700) étant actionnées par le biais d'un déplacement vers le haut et vers le bas de la soupape d'évacuation de l'aspiration (730) en même temps qu'un croisement entre la fraise supérieure (110) et la fraise inférieure (210), ou à un moment prédéterminé après le croisement entre la fraise supérieure (110) et la fraise inférieure (210).

10. Appareil de coupe d'électrode selon la revendication 3 ou 4, le dispositif de soufflage (500) étant doté, d'un côté de celui-ci, d'un partie de réglage de l'injection (530) configurée pour ajuster un débit d'injection et/ou un nombre d'injections de la buse d'injection (520).
